# EUROPEAN PATENT SPECIFICATION

(11) **EP 4 605 777 B1**
(45) Date of publication and mention of the grant of the patent: **11.11.2026**
(21) Application number: 23789748.3
(22) Date of filing: 28.09.2023
(51) Int. Cl.: G01T 1/164, G01T 1/29

(54) **DOUBLE LIGHT OUTPUT SCINTILLATION STRUCTURE FOR SCINTIGRAPHIC INVESTIGATIONS**
SZINTILLATIONSSTRUKTUR MIT DOPPELTER LICHTABGABE FÜR SZINTIGRAPHISCHE UNTERSUCHUNGEN
STRUCTURE DE SCINTILLATION À DOUBLE SORTIE DE LUMIÈRE POUR INVESTIGATIONS SCINTIGRAPHIQUES

(30) Priority: 21.10.2022 IT 202200021738
(43) Date of publication of application: 27.08.2025
(73) Proprietor: Consiglio Nazionale Delle Ricerche, 00185 Roma (IT)
(72) Inventor: SOLURI, Alessandro, 00185 ROME (IT); MASSARI, Roberto, 00048 NETTUNO (RM) (IT)
(74) Representative: Bellomia, Paolo
(86) International application number: PCT/IB2023/059681
(87) International publication number: WO 2024/084314

(56) References cited:
- JP-B2- 7 154 538
- US-A1- 2009 242 838
- US-A1- 2016 209 523
- US-A1- 2019 353 807
- US-A1- 2022 214 464

## Description

This invention relates to a measuring structure of the type present in diagnostic imaging devices for PET or SPECT analyses used for locating lymph nodes, tumours and/or other diseases.

Currently, a radiopharmaceutical is administered to a patient in order to locate diseases such as those listed above. The radiopharmaceutical tends to bind with the pathogenic cells defining a bio-distribution that can be displayed by measurement devices.

As is known, the imaging devices use the conversion of the energy of the photons of the incident radiation into light in such a way that the latter can be "collected" by electronic devices such as, for example, photodiodes or phototubes.

The prior art imaging devices are substantially formed by a scintillation structure (that is to say, by a single large crystal or a plurality of scintillation crystals), one or more photomultiplicators and, if necessary, a collimator (in the case of SPECT techniques).

In more detail, the photomultiplicator is connected to the scintillation structure by means of a suitable optical connection and its purpose is to detect the luminous photons of the incident radiation transforming them into an electrical signal which is amplified and carried towards the processing circuits to recreate the image of the radiation source, that is to say, of the zone affected by disease.

The photomultiplicator is normally associated with the entire surface of the scintillation structure.

The collimator, on the other hand, if present, is positioned between the source which emits radiation and the scintillation structure and has the purpose of allowing the passage of only the radiation directed perpendicularly to the scintillation structure, screening all the radiation directed in different directions.

In order to improve the intrinsic spatial resolution of the imaging devices, measuring structures have been developed which comprise a plurality of scintillation crystals positioned side by side to form a matrix of crystals.

There are prior art matrix structures, that is to say, structures wherein individual bar-shaped crystals are coated with epoxy resins, the purpose of which is to keep the crystals equidistant and able to converge the light from the outlet face towards the photomultiplicator. In this situation, the radiation emitted strikes the volume of the scintillation crystal on the upper part most in contact with the collimator whilst the other coated faces convey the light produced towards the photomultiplicator (in such a way as to obtain, by processing the signals collected, an image relative to the bio-distribution of the radiopharmaceutical).

In fact, during PET or SPECT type analyses, the radiopharmaceutical emits radiation in different directions, some of which intercept the crystals causing an impact of the photons on them at respective scintillation points.

In this situation, Compton diffusion events in the crystal can be produced, which can generate multiple interaction between nearby crystals and which, in turn, can contribute to an incorrect reconstruction of the position of the interaction event. In general, the fact that one or more photons produce scintillation points between adjacent crystals with respect to the first interaction results in a potential error in the calculation of the position of the interaction of the photon and thus obtaining a more degraded image in the final information (signal-noise ratio).

Also in the case of PET applications, the Compton event between crystals can determine an incorrect calculation of the position of first interaction thereby falsifying the counting statistics as well as the final image of the zone affected by disease.

In other words, a problem particularly felt is that relative to the Compton effects which arise between nearby crystals contributing to a distribution of false events on the image obtained. Another element which affects the noise of the scintigraphic images may be determined by the Compton events which may be produced inside the body, due to the interaction of the photons emitted which encounter surrounding tissue. These photons, degraded in energy, can reach the detector and be recorded as total events.

More specifically, in the case of SPECT applications with emissions of single photons, this aspect is largely resolved with the use of collimators which filter the passage of the angled photons which come from the body but, disadvantageously, they cannot prevent the passage of those photons which pass through the holes of the collimator after having undergone scattering inside the body and which arrive at right angles on the detector. These events, having an energy less than the incident energy, can be eliminated only if they are outside the energy window selected for forming the image. An example of system is disclosed in US2022214464A1. It discloses a PET imaging system with a scintillator array coupled on opposite surfaces to orthogonal photosensor sets, enabling identification of the hit scintillator, depth of interaction, and corrected interaction timing for image reconstruction.

The technical purpose of the invention is therefore to provide a measuring structure which is able to overcome the drawbacks of the prior art.

The aim of the invention is therefore to provide a measuring structure, as defined in claim 1, which has a better spatial resolution.

A further aim of the invention is to provide a measuring structure which can be used both for the SPECT and for the PET techniques.

A further aim of the invention is to provide a measuring structure which is able to improve the diagnostic performance in terms of contrast of the images and, in general, optimise the diagnostic information.

A further aim of the invention is to provide a measuring structure which is able to limit events which are not useful for forming the image thus contributing to the exclusive selection of the events valid for forming the scintigraphic image.

The technical purpose indicated and the aims specified are substantially achieved by a measuring structure comprising the technical features described in one or more of the accompanying claims. The dependent claims correspond to possible embodiments of the invention.

Further features and advantages of the invention are more apparent in the non-limiting description which follows of a non-exclusive embodiment of a measuring structure.

The description is set out below with reference to the accompanying drawings which are provided solely for purposes of illustration without restricting the scope of the invention and in which:
- Figure 1 is a perspective view of a measuring structure according to the invention;
- Figure 2 is a perspective view of several assembled measuring structures;
- Figure 3 shows a cross section view of a PET measuring ring.

With reference to the accompanying drawings, the numeral 100 denotes a measuring structure for PET or SPECT applications.

The measuring structure 100 comprises a matrix of scintillation crystals 200 configured for simultaneously measuring radiation coming from a zone of the body suitably stressed by means of a radiopharmaceutical.

According to a possible embodiment, the scintillation crystals 200 of the matrix are non-hygroscopic crystals such as, for example: LYSO, LSO, GSO and the like.

Alternatively, the scintillation crystals 200 of the matrix are hygroscopic crystals such as, for example: Sodium iodide (NaI(Tl)), lanthanum chloride (LaCl3:Ce) and lanthanum bromide (LaBr3:Ce) and the like.

As shown in the accompanying drawings, each scintillation crystal 200 has the shape of a bar, that is to say, substantially parallelepiped. In this situation, each scintillation crystal 200 has two faces perpendicular to the longitudinal axis "X" and defining, respectively, the first and the second surface of the output of light of the crystals, whilst the remaining faces of the bar define a lateral peripheral surface extending parallel to the longitudinal axis "X" useful for conveying the light towards the output faces. Each scintillation crystal 200 extends along a longitudinal axis "X", between two surfaces with light output faces which are opposite each other.

According to the embodiment illustrated, the scintillation crystals 200 have, in cross section, a substantially square shape with respect to the longitudinal axis X. Alternatively, each scintillation crystal 200 has, in cross section, a substantially rectangular shape.

Preferably, each scintillation crystal 200 has a constant cross section along the longitudinal axis "X", that is to say, each scintillation crystal 200 does not have a variation of the area along the longitudinal axis "X".

Preferably, the cross-section of the scintillation crystals 200 is between 1 mm² and 30 mm² and more preferably between 5 mm² and 20 mm².

As shown in the embodiment of the accompanying drawings, the dimension of each scintillation crystal 200 along the longitudinal axis "X" is greater than the corresponding transversal dimension.

According to an aspect of the invention, each scintillation crystal 200 comprises a length, measured along the longitudinal axis "X", preferably between 2 cm and 15 cm.

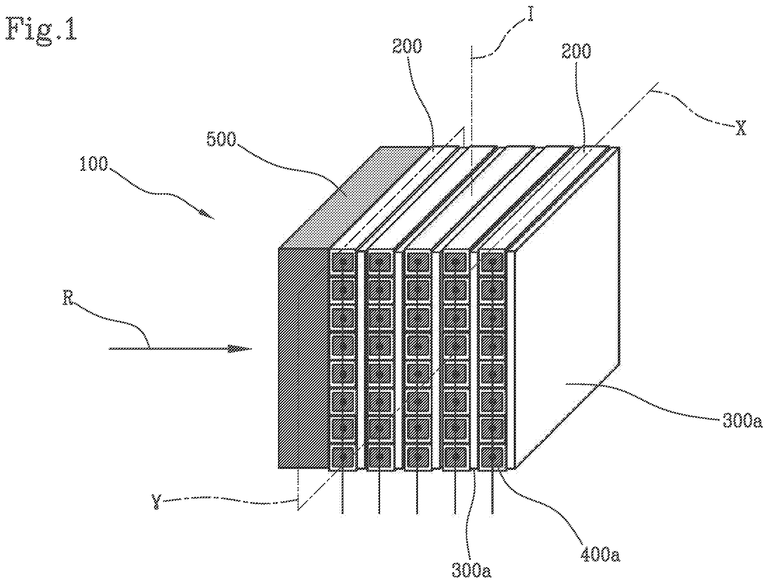

As shown in Figure 1, the scintillation crystals 200 are parallel to each other and oriented in such a way as to define a measuring direction "R" that is transversal, preferably perpendicular, to the longitudinal axis "X".

In more detail, the scintillation crystals 200 are moved towards each other in such a way that the lateral peripheral surfaces of a scintillation crystal 200 are adjacent to respective lateral peripheral surfaces of the nearby scintillation crystals 200 in such a way as to form a matrix.

The matrix is organised in such a way that, on each plane γ perpendicular to the measuring direction "R" there is a series of scintillation crystals 200 stacked on top of each other in such a way that the longitudinal axes "X" are perpendicular to the measuring direction "R" and lie on the plane γ.

In more detail, the scintillation crystals 200 lying on a same plane γ are stacked along a stacking direction "I" perpendicular to the measuring direction "R" and to the longitudinal axes "X" in such a way as to form a "layer" of scintillation crystals 200.

By way of example, in Figure 1 there are five planes γ (only one of them is indicated in the drawing) each perpendicular to the measuring direction "R" and having, stacked on each other along the stacking direction "I", eight scintillation crystals 200.

As shown in the accompanying drawings, the measuring structure 100 also comprises first sheets 300a perpendicular to the measuring direction "R" and made of a metal material with a high atomic number designed to screen the incident radiations having energy that is lower than a predetermined threshold. The first sheets 300a are configured for separating from each other the scintillation crystals 200.

The first sheets 300a are parallel to the planes γ defined by the scintillation crystals 200 and are interposed between one plane γ and the other in such a way as to act as dividing elements for the layers of scintillation crystals 200.

As shown in Figure 1, the first sheets 300a divide the matrix of scintillation crystals 200 into "layers" transversal to the measuring direction "R" and each formed by the same number of scintillation crystals 200.

In this situation, the first sheets 300a define, for the layers of scintillation crystals 200, screens of the incident radiation, the screening effect of which is added along the measuring direction "R".

With reference for example to Figure 1, at the moment of absorbing the incident radiation, the layer of scintillation crystals 200 further to the left will have the greater energy level (since it is the first to be struck by the radiation) whilst the layer of scintillation crystals 200 further to the right will have the lower energy level since, during the passage from one layer of scintillation crystals 200 to another, the first sheets 300a progressively absorb the radiation.

Preferably, the first sheets 300a are made of metal material, for example tungsten or tungsten or platinum alloys, with a high atomic number, more suitable for slowing high energies which can absorb external events from the energy window selected for forming the image. For example, having fixed a window for selecting the events in energy, between 400 keV and 600 keV, the sheets 300a are designed to absorb energy events of less than 400 keV. The layers after the first must not necessarily comprise the same thicknesses as the previous materials and may be partly replaced by materials with a lower Z. This is because interactions may occur in the absorbent material which induce fluorescence, which can be absorbed by means of these layers.

As shown in Figure 1, the measuring structure 100 is formed by a plurality of scintillation crystals 200 with the shape of a bar and assembled together in such a way as to define a plurality of layers perpendicular to the measuring direction "R". Each layer is formed by a series of scintillation crystals 200 stacked along the stacking direction "I" and is separated from the adjacent layer by the interposition of a first sheet 300a of the plurality.

According to the preferred embodiment, the scintillation crystals 200 are also separated from each other by an optically reflective material, for example a resin. In particular, the scintillation crystals 200 are separated from each other by a coating directly applied to the scintillation crystal 200.

Preferably, this optical coating covers entirely the longitudinal surfaces of each scintillation crystal 200. In this situation, each scintillation crystal 200 has the light output faces clear of any coating.

As shown in Figure 1, the scintillation crystals 200 belonging to the same layer are separated from one another, along the stacking direction "I", thanks to the presence of the reflective material applied to the lateral surface of each scintillation crystal 200.

Again with reference to Figure 1, each first layer 300a is interposed between the reflective optical coating of the scintillation crystals 200 of a layer and that of the layer of the scintillation crystals 200 adjacent to it.

In use, therefore, the scintillation crystals 200 are coated, on their lateral surfaces, with the reflective material and are positioned in such a way as to form respective layers of scintillation crystals 200.

In more detail, each layer has the scintillation crystals 200 stacked on top of each other along the stacking direction "I" with the longitudinal axes "X" parallel to each other. In this situation, each scintillation crystal 200 is separated from the scintillation crystal 200 and from the one below along the stacking direction "I" by the respective layers of reflective material.

The various layers are then moved towards each other in such a way that a first sheet 300a is interposed between one layer and another. The distance between the various layers may be variable and not fixed.

The measuring structure 100 assembled in this way is struck by the radiation incident along the measuring direction "R" transversal to the longitudinal axes "X". In this situation, it is the peripheral lateral surface of the scintillation crystals 200 that is exposed to the radiation whilst the faces free from each screen act as output faces for the radiation.

The measuring structure 100 comprises a first electronic conversion circuitry 400a associated with the first surface of each scintillation crystal 200 for receiving an optical signal and converting it into an electrical signal.

The measuring structure 100 comprises a second electronic conversion circuitry 400b associated with the second surface of each scintillation crystal 200 for receiving an optical signal and converting it into an electrical signal.

In other words, the first and the second surface of each scintillation crystal 200 are associated, respectively, with the first and the second electronic conversion circuitry 400a, 400b in such a way that two optical signals are received simultaneously and are converted into respective electrical signals.

In particular, the first and second electronic conversion circuitries 400a, 400b are synchronised with each other to perform a simultaneous conversion of the respective optical signals.

By way of a non-limiting example, the first and the second electronic conversion circuitries 400a, 400b may be achieved in the form of photodiodes, SiPM or MPPC.

Advantageously, unlike the prior art wherein a single scintillation crystal is coupled to an electronic device which must necessarily record all the information deriving from the interaction of the radiation incident with the scintillation crystal, the distribution in layers of the scintillation crystals 200 allows discrete information to be recorded on how the energy is deposited in each scintillation crystal 200 as a function of its probability of interaction with the incident radiation.

According to an aspect of the invention, the scintillation crystals 200 may also be separated from each other by second sheets (not illustrated) perpendicular to the first sheets 300a and made of metal material with a high atomic number designed to screen the incident radiation having energy less than a predetermined threshold. Preferably, the first sheets 300a and the second sheets are integrated in a single monolithic grid structure, also with elements of different sizes from each other. Alternatively, the first sheets 300a and the second sheets are reversibly engageable to each other to form the above-mentioned grid.

As shown in Figure 1, the structure 100 also comprises at least one filter 500 applied to a lateral face of the matrix of scintillation crystals 200 perpendicularly to the measuring direction "R" and configured to absorb the radiation having energy of lower than a predetermined value.

Preferably, the filter 500 is applied on the lateral face of the matrix facing towards the radiation.

The filter 500 is of the multilayer type and, preferably, at least one layer is made of a metallic material, whilst at least one layer is made of a material with a low density.

More preferably, the metallic material is selected between: copper, tungsten, gadolinium, yttrium, aluminium lead, bismuth, tin and brass.

When the radiation strikes the measuring structure 100, in the case of an occurrence of Compton events coming from the body and directed on the measuring structure 100, this event can potentially distort the signal acquired for forming the image relative to the bio-distribution.

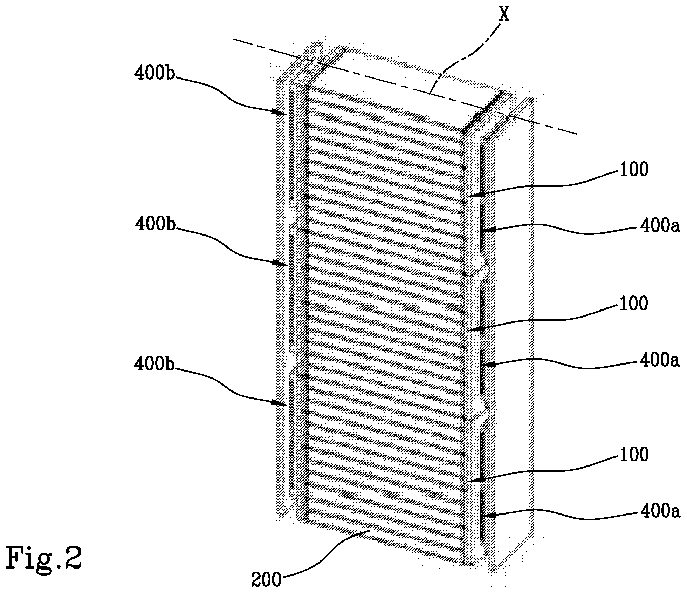

By using the filter 500 it is, on the other hand, possible to clean the signal of nonuseful contributions for the formation of the image in such a way as to information with a greater contrast both in SPECT and PET techniques. According to an aspect of the invention, the matrix of scintillation crystals 200 comprises a two-dimensional distribution of crystals where the number of crystals along a first dimension is between 3 and 10 and the number of crystals along the second direction is between 20 and 100 (as shown, for example, in Figure 2).

This allows the analysis of any areas affected by larger sized pathology.

In this regard, thanks to the placing alongside each other of several scintillation crystals 200 in a two-dimensional structure such as that shown in Figure 2, it is possible to increase the limit on the dimensions of the investigation zone.

In other words, by assembling, along the longitudinal axis "X", several scintillation structures 100 it is possible to make up larger structures which are able to scan a zone affected by a pathology having larger dimensions.

The use of several assembled scintillation structures 100 is particularly advantageous especially in the PET detection rings "A" since it allows particularly precise images to be obtained without excessively increasing the dimensions of the entire ring "A".

In this situation, the PET measuring ring "A" comprises a plurality of measuring structures 100 distributed angularly about an axis of symmetry "S" of the ring "A".

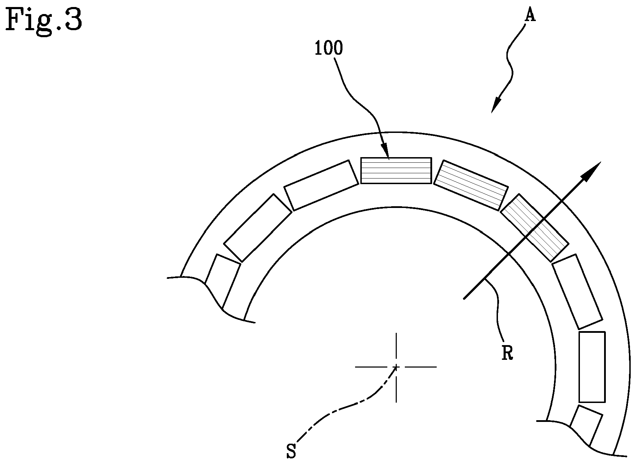

As shown in Figure 3, each measuring structure 100 is made as described above. Preferably, the number of measuring structures 100 is between 20 and 100 and, more preferably, between 40 and 50.

The invention achieves the preset aims eliminating the drawbacks of the prior art. In particular, the presence of the double electronic conversion circuitry in conjunction with the distribution of the scintillation crystals makes it possible to improve the diagnostic performance in terms of contrast of the images and, in general, optimise the diagnostic information.

The measuring structure, according to the invention, is able to limit events which are not useful for forming the image thus contributing to the exclusive selection of the events valid for forming the scintigraphic image.

## Claims

1. A measuring structure (100) for PET or SPECT applications comprising:
- a matrix of scintillation crystals (200), each scintillation crystal (200) having the shape of a bar and extending along a longitudinal axis (X) between a first surface and a second surface opposite the first surface, the dimension of each scintillation crystal (200) along the axis (X) being greater than the corresponding transversal dimension, wherein the scintillation crystals (200) are parallel to each other and oriented in such a way as to define a measuring direction (R) transversal, preferably perpendicular, to said longitudinal axis (X);
- a first electronic conversion circuitry (400a) associated with the first surface of each scintillation crystal (200) for receiving an optical signal and converting it into an electrical signal;
- a second electronic conversion circuitry (400b) associated with the second surface of each scintillation crystal (200) for receiving an optical signal and converting it into an electrical signal;
wherein the scintillation crystals (200) are separated from each other by at least first sheets (300a) perpendicular to said measuring direction (R); said measuring structure (100) being **characterized in that** said at least first sheets (300a) are made of a metal material with a high atomic number designed to screen the incident radiations having energy that is lower than a predetermined threshold.

2. The structure according to claim 1, wherein the scintillation crystals (200) are separated from each other also by second plates perpendicular to said first plates (300a) and made of a metal material having a high atomic number suited to shield incident radiations having energy that is lower than a predetermined threshold, said first plates (300a) and second plates preferably being integrated in a single monolithic grid-shaped structure.

3. The structure according to claim 1 or 2, wherein the scintillation crystals (200) are also separated from each other by an optically reflective barrier, in particular a coating directly applied to the crystal; preferably, said barrier entirely covering the lateral peripheral surface of each scintillation crystal (200).

4. The structure according to any one of the preceding claims, wherein each scintillation crystal (200) has a length, measured along the longitudinal axis (X), of between 3 cm and 20 cm.

5. The structure according to any one of the preceding claims, wherein the cross section of said scintillation crystals (200) is between 1 mm and 30 mm, preferably between 5mm² and 20mm².

6. The structure according to any one of the preceding claims, wherein the structure (100) comprises at least one filter (500) applied to a lateral face of the matrix of scintillation crystals (200) perpendicularly to the measuring direction and configured to absorb the radiation having energy of lower than a predetermined value.

7. The structure according to claim 6, wherein said filter (500) is of the multilayer type, said filter (500) preferably being a multilayer wherein at least one layer is made of a metallic material and at least one layer is made of a low density material, said metallic material preferably being selected from among: copper, tungsten, gadolinium, yttrium, lead aluminium, bismuth, tin and brass.

8. The structure according to any one of the preceding claims, wherein said first and second electronic conversion circuitries (400a, 400b) are synchronised with each other to perform a simultaneous conversion of the respective optical signals.

9. The structure according to any one of the preceding claims, wherein said matrix of scintillation crystals (200) comprises a two-dimensional distribution of scintillation crystals, wherein the number of scintillation crystals along a first dimension is between 3 and 10 and the number of scintillation crystals along the second direction is between 20 and 100.

10. A PET measuring ring (A), comprising a plurality of measuring structures (100) distributed angularly about an axis of symmetry (S) of the ring (A), wherein each measuring structure (100) is made according to any one of the preceding claims, preferably said measuring structures (100) being between 20 and 100, more preferably between 40 and 50.

## Patentansprüche

1. Messstruktur (100) für PET- oder SPECT-Anwendungen, umfassend:
- eine Matrix aus Szintillationskristallen (200), wobei ein jeder Szintillationskristall (200) die Form eines Stabes aufweist und sich entlang einer Längsachse (X) zwischen einer ersten Oberfläche und einer zweiten Oberfläche gegenüber der ersten Oberfläche erstreckt, wobei die Abmessung eines jeden Szintillationskristalls (200) entlang der Achse (X) größer ist als die entsprechende Querabmessung, wobei die Szintillationskristalle (200) parallel zueinander und so ausgerichtet sind, dass sie eine Messrichtung (R) definieren, die quer, vorzugsweise senkrecht, zur Längsachse (X) verläuft;
- eine erste elektronische Umwandlungsschaltungsanordnung (400a), die mit der ersten Oberfläche eines jeden Szintillationskristalls (200) assoziiert ist, um ein optisches Signal zu empfangen und es in ein elektrisches Signal umzuwandeln;
- eine zweite elektronische Umwandlungsschaltungsanordnung (400b), die mit der zweiten Oberfläche eines jeden Szintillationskristalls (200) assoziiert ist, um ein optisches Signal zu empfangen und es in ein elektrisches Signal umzuwandeln;
wobei die Szintillationskristalle (200) durch mindestens erste Platten (300a) senkrecht zur Messrichtung (R) voneinander getrennt sind; wobei die Messstruktur (100) **dadurch gekennzeichnet ist, dass** die mindestens ersten Platten (300a) aus einem Metallmaterial mit einer hohen Ordnungszahl gefertigt sind, das dazu bestimmt ist, die einfallenden Strahlen, deren Energie niedriger als ein vorgegebener Schwellenwert ist, abzuschirmen.

2. Struktur nach Anspruch 1, wobei die Szintillationskristalle (200) auch durch zweite Platten voneinander getrennt sind, die senkrecht zu den ersten Platten (300a) stehen und aus einem Metallmaterial mit einer hohen Ordnungszahl gefertigt sind, das geeignet ist, einfallende Strahlungen, deren Energie niedriger als ein vorgegebener Schwellenwert ist, abzuschirmen, wobei die ersten Platten (300a) und die zweiten Platten vorzugsweise in einer einzigen monolithischen gitterförmigen Struktur integriert sind.

3. Struktur nach Anspruch 1 oder 2, wobei die Szintillationskristalle (200) auch durch eine optisch reflektierende Barriere voneinander getrennt sind, insbesondere durch eine Beschichtung, die direkt auf den Kristall aufgebracht ist; wobei die Barriere vorzugsweise die seitliche Umfangsoberfläche eines jeden Szintillationskristalls (200) vollständig bedeckt.

4. Struktur nach einem der vorhergehenden Ansprüche, wobei ein jeder Szintillationskristall (200) eine Länge, gemessen entlang der Längsachse (X), zwischen 3 cm und 20 cm aufweist.

5. Struktur nach einem der vorhergehenden Ansprüche, wobei der Querschnitt der Szintillationskristalle (200) zwischen 1 mm und 30 mm, vorzugsweise zwischen 5mm² und 20mm² liegt.

6. Struktur nach einem der vorhergehenden Ansprüche, wobei die Struktur (100) mindestens einen Filter (500) umfasst, der auf eine Seitenfläche der Matrix aus Szintillationskristallen (200) senkrecht zur Messrichtung aufgebracht ist und so konfiguriert ist, dass er die Strahlung, deren Energie niedriger als ein vorgegebener Schwellenwert ist, absorbiert.

7. Struktur nach Anspruch 6, wobei der Filter (500) vom Mehrschichttyp ist, wobei der Filter (500) vorzugsweise eine Mehrschicht ist, bei der mindestens eine Schicht aus einem metallischen Material gefertigt ist und mindestens eine Schicht aus einem Material mit geringer Dichte gefertigt ist, wobei das metallische Material vorzugsweise ausgewählt ist aus: Kupfer, Wolfram, Gadolinium, Yttrium, Blei, Aluminium, Wismut, Zinn und Messing.

8. Struktur nach einem der vorhergehenden Ansprüche, wobei die erste und die zweite elektronische Umwandlungsschaltungsanordnung (400a, 400b) miteinander synchronisiert sind, um eine gleichzeitige Umwandlung der jeweiligen optischen Signale durchzuführen.

9. Struktur nach einem der vorhergehenden Ansprüche, wobei die Matrix aus Szintillationskristallen (200) eine zweidimensionale Verteilung von Szintillationskristallen umfasst, wobei die Anzahl der Szintillationskristalle entlang einer ersten Abmessung zwischen 3 und 10 ist und die Anzahl der Szintillationskristalle entlang der zweiten Richtung zwischen 20 und 100 ist.

10. PET-Messring (A), umfassend eine Vielzahl von Messstrukturen (100), die winklig um eine Symmetrieachse (S) des Rings (A) verteilt sind, wobei eine jede Messstruktur (100) nach einem der vorhergehenden Ansprüche gefertigt ist, wobei die Messstrukturen (100) vorzugsweise zwischen 20 und 100, besonders bevorzugt zwischen 40 und 50, liegen.

## Revendications

1. Structure de mesure (100) destinée à des applications PET ou SPECT, comprenant :
- une matrice de cristaux de scintillation (200), chaque cristal de scintillation (200) ayant la forme d'une barre et s'étendant le long d'un axe longitudinal (X) entre une première surface et une seconde surface opposée à la première surface, la dimension de chaque cristal de scintillation (200) le long de l'axe (X) étant supérieure à la dimension transversale correspondante, les cristaux de scintillation (200) étant parallèles les uns aux autres et orientés de manière à définir une direction de mesure (R) transversale, de préférence perpendiculaire, audit axe longitudinal (X) ;
- une première circuiterie de conversion électronique (400a) associée à la première surface de chaque cristal de scintillation (200) pour recevoir un signal optique et le convertir en un signal électrique ;
- une seconde circuiterie de conversion électronique (400b) associée à la seconde surface de chaque cristal de scintillation (200) pour recevoir un signal optique et le convertir en un signal électrique ;
dans laquelle les cristaux de scintillation (200) sont séparés les uns des autres par au moins des premières feuilles (300a) perpendiculaires à ladite direction de mesure (R) ; ladite structure de mesure (100) étant **caractérisée en ce que** lesdites au moins premières feuilles (300a) sont constituées d'un matériau métallique à numéro atomique élevé, conçu pour faire écran aux rayonnements incidents dont l'énergie est inférieure à un seuil prédéterminé.

2. Structure selon la revendication 1, dans laquelle les cristaux de scintillation (200) sont également séparés les uns des autres par des secondes plaques perpendiculaires auxdites premières plaques (300a) et constituées d'un matériau métallique présentant un numéro atomique élevé, adapté pour faire écran aux rayonnements incidents dont l'énergie est inférieure à un seuil prédéterminé, lesdites premières plaques (300a) et secondes plaques étant de préférence intégrées dans une structure monolithique unique en forme de grille.

3. Structure selon la revendication 1 ou 2, dans laquelle les cristaux de scintillation (200) sont également séparés les uns des autres par une barrière optiquement réfléchissante, en particulier un revêtement appliqué directement sur le cristal ; de préférence, ladite barrière recouvrant entièrement la surface périphérique latérale de chaque cristal de scintillation (200).

4. Structure selon l'une quelconque des revendications précédentes, dans laquelle chaque cristal de scintillation (200) présente une longueur, mesurée le long de l'axe longitudinal (X), comprise entre 3 et 20 cm.

5. Structure selon l'une quelconque des revendications précédentes, dans laquelle la section transversale desdits cristaux de scintillation (200) est comprise entre 1 et 30 mm, de préférence entre 5 et 20 mm².

6. Structure selon l'une quelconque des revendications précédentes, dans laquelle la structure (100) comprend au moins un filtre (500) appliqué sur une face latérale de la matrice de cristaux de scintillation (200) perpendiculairement à la direction de mesure et configuré pour absorber le rayonnement ayant une énergie inférieure à une valeur prédéterminée.

7. Structure selon la revendication 6, dans laquelle ledit filtre (500) est de type multicouche, ledit filtre (500) étant de préférence une structure multicouche, dans laquelle au moins une couche est constituée d'un matériau métallique et au moins une couche est constituée d'un matériau à faible densité, ledit matériau métallique étant de préférence choisi parmi : le cuivre, le tungstène, le gadolinium, l'yttrium, le plomb, l'aluminium, le bismuth, l'étain et le laiton.

8. Structure selon l'une quelconque des revendications précédentes, dans laquelle lesdites première et seconde circuiteries de conversion électronique (400a, 400b) sont synchronisées l'une avec l'autre pour effectuer une conversion simultanée des signaux optiques respectifs.

9. Structure selon l'une quelconque des revendications précédentes, dans laquelle ladite matrice de cristaux de scintillation (200) comprend une distribution bidimensionnelle de cristaux de scintillation, le nombre de cristaux de scintillation le long d'une première dimension est compris entre 3 et 10 et le nombre de cristaux de scintillation le long de la seconde dimension est compris entre 20 et 100.

10. Anneau de mesure PET (A), comprenant une pluralité de structures de mesure (100) réparties angulairement autour d'un axe de symétrie (S) de l'anneau (A), dans lequel chaque structure de mesure (100) est réalisée selon l'une quelconque des revendications précédentes, de préférence ledit nombre de structures de mesure (100) étant compris entre 20 et 100, plus préférablement entre 40 et 50.
